(19) Europäisches Patentamt
European Patent Office
Office européen des brevets

(11) Veröffentlichungsnummer: **0 052 069**
**A1**

(12) **EUROPÄISCHE PATENTANMELDUNG**

(21) Anmeldenummer: **81810415.0**

(22) Anmeldetag: **15.10.81**

(51) Int. Cl.³: **C 09 B 63/00**, C 09 B 29/16 // C08K5/23

(30) Priorität: **21.10.80 GB 8033934**

(43) Veröffentlichungstag der Anmeldung: **19.05.82 Patentblatt 82/20**

(84) Benannte Vertragsstaaten: **DE FR GB IT**

(71) Anmelder: **CIBA-GEIGY AG, Patentabteilung Postfach, CH-4002 Basel (CH)**

(72) Erfinder: **Campbell, Colin Dennis, Dr., 1, Boghead, Beith Ayrshire Scotland (GB)**

(54) **Neue Rotpigmente.**

(57) Pigmente der Formel

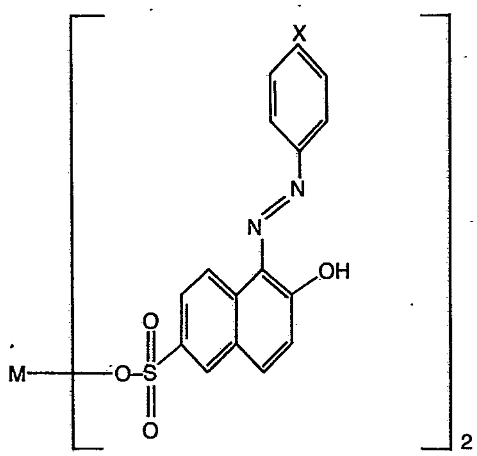

worin X und M die in Patentanspruch 1 angegebene Bedeutung haben, eignen sich zum Pigmentieren von hochmolekularem organischem Material. Sie ergeben rote Färbungen und zeichnen sich durch hohe Hitze-, Migrations- und Überlackierechtheit aus.

EP 0 052 069 A1

CIBA-GEIGY AG 3-13112/=

Basel (Schweiz)

Neue Rotpigmente

Die Erfindung betrifft neue Rotpigmente, das Verfahren zu deren Herstellung und deren Verwendung.

Die JP-OS 1697/73 beschreibt ein Verfahren zur Herstellung von Azopigmenten durch Kuppeln eines aromatischen Amins, das frei von Sulphonsäure- und Carbonsäuregruppen ist, mit einem α- oder β-Naphthol. Nach dem Sulphonieren und Umsetzen mit einem Metallsalz erhält man ein gleichmässiges Gemisch von verschiedenartig sulphonierten Azopigmenten. Man erhält jedoch Azopigmente mit verbesserter Farbstärke und von klarerer Farbe, wenn man als Kupplungskomponente ein sulphoniertes Naphthol einsetzt, um die reine Einzelverbindung zu erzielen.

Die neuen Pigmente entsprechen der Formel I

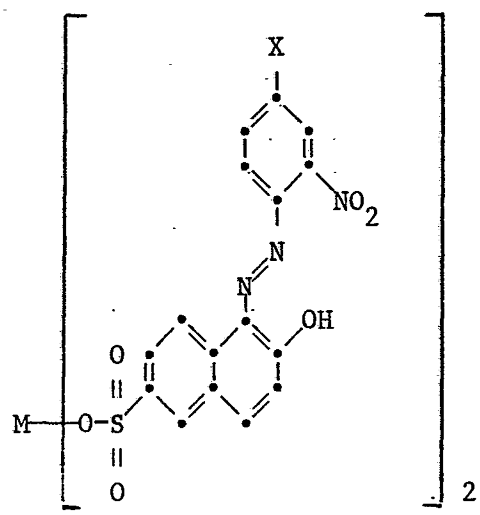

(I) ,

worin X Wasserstoff, Methoxy oder $-CO_2R$ bedeutet, wobei R Wasserstoff oder ein Alkali- oder Erdalkalimetall ist, und M Mg, Ca, Sr oder Ba oder eine Mischung dieser Metalle bedeutet.

Ein besonders bevorzugtes Pigment entspricht der Formel I, worin X Wasserstoff und M Ca bedeuten.

Die Pigmente der Formel I können hergestellt werden, indem man

a) das Diazoniumsalz eines Amins der Formel II

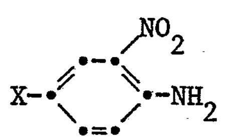 (II) ,

worin X die oben angegebene Bedeutung hat, mit 2-Naphthol-6-sulphonsäure kuppelt, den entstandenen Azofarbstoff mit Mg-, Ca-, Sr- oder Ba-Salzen von organischen oder anorganischen Säuren oder mit Mischungen dieser Salze ausfällt ("verlackt") und das entstandene Produkt einer Hitzebehandlung unterwirft, oder

b) 2-Naphthol-6-sulphonsäure zuerst mit einem Mg-, Ca-, Sr- oder Ba-Salz einer organischen oder anorganischen Säure oder mit Mischungen dieser Salze umsetzt und anschliessend mit dem Diazoniumsalz eines Amins der Formel II kuppelt, und das entstandene Produkt einer Hitzebehandlung unterwirft.

Die Amine der Formel II sind bekannte Verbindungen.

Beispiele für Mg-, Ca-, Sr- und Ba-Salze sind Mg-, Ca-, Sr- und Ba-Chlorid, -Sulphat, -Nitrat, -Acetat oder -Formiat.

Die Kupplung kann man so durchführen, dass man die Diazokomponente zur

Kupplungskomponente zugibt, oder auch umgekehrt vorgeht. Beide Komponenten können aber auch gleichzeitig zu Wasser, einer wässerigen Pufferlösung oder Metallsalzlösung gegeben werden. Man hält den pH-Wert des Kupplungsgemisches vorzugsweise zwischen 2 und 12, insbesondere zwischen 7 und 10.

Nach der Kupplung und Ausfällung ("Verlackung") unterwirft man das Reaktionsprodukt einer Wärmebehandlung, die eine Kristallinitätsveränderung bewirkt und zum gewünschten Pigment führt. Die für die Kristallinitätsveränderung benötigte Zeit liegt zwischen 1 und 30 Minuten bei 90 - 100°C.

Während oder nach der Kupplung, Ausfällung oder Wärmebehandlung kann man zum Reaktionsgemisch oberflächenaktive Mittel und Harze zugeben. Die oberflächenaktiven Mittel fördern die Bildung von Einzelteilchen und verbessern die Eigenschaften des Endproduktes. Die Harze erhöhen die Dispergierbarkeit des Pigmentes im Substrat.

Das Pigment kann durch Filtration isoliert werden. Ueberschüssige Salze können durch Waschen mit Wasser entfernt werden. Das Pigment lässt sich durch Sieben oder Mahlen oder durch eine andere herkömmliche Methode trocknen und pulverisieren.

Die erfindungsgemässen Pigmente eignen sich zum Pigmentieren von hochmolekularen organischen Materialien natürlicher oder synthetischer Herkunft, wie beispielsweise von natürlichen Harzen, Trockenölen, Gummi, von modifizierten Naturprodukten, wie chloriertem Gummi, ölmodifizierten Alkydharzen oder Cellulosederivaten, wie Viscose, Acetylcellulose und Nitrocellulose, und vor allem von vollsynthetischen organischen Polyplasten, d.h. von Kunststoffen, die durch Polymerisation, Polykondensation und Polyaddition hergestellt werden. Kunststoffe dieser Kategorie sind insbesondere Polyäthylen,

Polypropylen, Polyisobutylen, Polystyrol, Polyvinylchlorid, Polyvinylacetat, Polyacrylnitril, Polyacrylate, Polymethacrylate, Polyester, vor allem hochmolekulare Ester von aromatischen Polycarbonsäuren mit polyfunktionellen Alkoholen, ferner Polyamide, die Kondensationsprodukte von Formaldehyd mit Phenolen, d.h. die sogenannten Phenoplaste, ferner die Kondensationsprodukte von Formaldehyd mit Harnstoff, Thioharnstoff und Melamin, d.h. die sogenannten Aminoplaste, ferner die als Lackharze benutzten Polyester, vor allem gesättigte Harze, wie Alkydharze und ungesättigte Harze, wie Maleatharze, ferner die Polyadditions- und Polykondensationsprodukte von Epichlorhydrin mit Diolen oder Polyphenylen, die sogenannten Epoxidharze, ferner Thermoplaste, d.h. nicht-härtbare Polyplaste. Die genannten Verbindungen können einzeln oder in Mischungen erfindungsgemäss pigmentiert werden.

Die erfindungsgemässen Pigmente eignen sich zum Pigmentieren von Vinyl-, Polyolefin- und Styrolpolymeren, von Polyplasten, von Filmbildnern oder Bindemitteln, den sogenannten Lackrohstoffen, insbesondere von Leinsamenöllack, Nitrocellulose, Alkydharzen, Melaminharzen und Harnstoff-Formaldehydharzen.

Die erfindungsgemässen Pigmente können beispielsweise durch Walzen, Mischen oder Mahlen, gegebenenfalls auch als Master-batch, in das hochmolekulare organische Material eingearbeitet werden. Das pigmentierte Material wird dann nach an sich bekannten Verfahren in die gewünschte Endform gebracht, beispielsweise durch Walzen, Formpressen, Strangpressen, Streichen, Giessen oder Spritzgiessen.

Vor der Formgebung können auch Weichmacher zugegeben werden, wie beispielsweise Phosphorsäure-, Phthalsäure- oder Sebacinsäureester. Um verschiedene Farbtönungen zu erhalten, lassen sich zusätzlich zu den erfindungsgemässen Pigmenten Füllstoffe oder andere Pigmente einarbeiten.

Zum Pigmentieren von Lacken und Drucktinten werden die hochmolekularen organischen Materialien und die erfindungsgemässen Pigmente, gegebenenfalls zusammen mit Additiven, wie Füllstoffen, andern Pigmenten, Trockenmitteln oder Weichmachern, in einem organischen Lösungsmittel oder Lösungsmittelgemisch fein dispergiert oder gelöst.

Das pigmentierte hochmolekulare organische Material enthält im allgemeinen 0,001 bis 30 Gew.-% Pigment bezogen auf das hochmolekulare organische Material. Polyplaste und Lacke enthalten bevorzugt 0,1 bis 5 Gew.-% und Drucktinten 10 bis 30 Gew.-% Pigment.

Das mit den erfindungsgemässen Pigmenten pigmentierte hochmolekulare organische Material zeigt rote, klare Farbtönungen mit guter Migrations-, Ueberlackier- und Hitzeechtheit, sowie guter Lösungsmittelbeständigkeit.

Die folgenden Beispiele erläutern die Erfindung.

Beispiel 1: Man gibt 35,4 g fein pulverisiertes o-Nitroanilin portionenweise in 65 ml konzentrierte Salzsäure und rührt die Mischung während 30 Minuten, bis sie homogen ist. Man kühlt das Gemisch durch Zugabe von Eiswasser auf 0°C und versetzt es mit einer Lösung von 17,9 g Natriumnitrit in 100 ml Wasser. Nach 2 Stunden wird die Diazoniumchloridlösung filtriert. 57,4 g 2-Naphthol-6-sulphonsäure (Schaeffer-Säure) und 20,5 g Natriumhydroxid werden bei 25°C gelöst. Man versetzt die Lösung mit Aktivkohle und Diatomeenerde und filtriert sie. Zum Filtrat gibt man eine Lösung von 22,1 g Calciumchloriddihydrat in Wasser und rührt dann das Gemisch bei 25°C.

Die Kupplungskomponente wird innert 30 Minuten bei 25°C unter Rühren mit der Diazoniumsalzlösung versetzt, wobei der pH-Wert durch Zugabe von Natronlauge bei 8 gehalten wird. Man rührt den

orangen Niederschlag während 20 Minuten, erwärmt ihn dann während 1 bis 30 Minuten bei 95°C, bis ein rotes, kristallines Produkt entsteht. Nach weiteren 15 Minuten Rühren bei 95°C kühlt man mit kaltem Wasser auf 70°C ab und filtriert. Der Filterrückstand wird mit 50°C-warmem Wasser chloridfrei gewaschen und während 24 Stunden bei 60°C in einem Ofen mit Luftumwälzung getrocknet. Man erhält 100 g orange-rotes Pigment der Formel

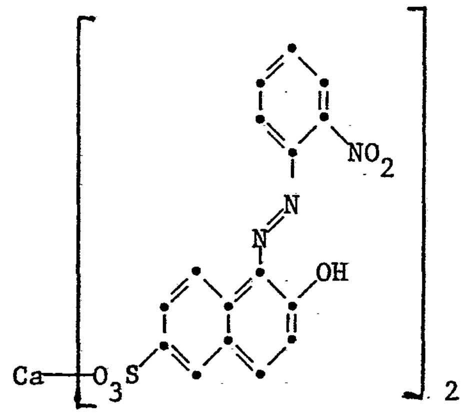

Summenformel: $C_{32}H_{20}N_6O_{12}S_2Ca \cdot 2H_2O$

| Mikroanalyse: | C | H | N | Ca | $H_2O$ |
|---|---|---|---|---|---|
| berechnet: | 46,8 | 2,9 | 10.2 | 4,9 | 4,4 % |
| gefunden: | 46,5 | 2,9 | 10,0 | 4,8 | 5,0 % |

Beispiel 2: Man geht wie in Beispiel 1 vor, ausser dass die wässerige Calciumchloriddihydratlösung nach der Kupplungsreaktion zugegeben wird. Nach Wärmebehandlung und Aufarbeiten wie in Beispiel 1 erhält man 100 g des gleichen orange-roten Produktes.

Beispiel 3: Man stellt die gleiche Diazonium- und gleiche alkalische 2-Naphthol-6-sulphonsäure-Lösung wie in Beispiel 1 her, und gibt beide Lösungen gleichzeitig bei pH 8 zur Calciumchloridlösung. Nach dem Erwärmen und Aufarbeiten wie in Beispiel 1 erhält man 100 g des gleichen orange-roten Pigmentes.

Beispiel 4: Man geht gleich wie in Beispiel 1 vor, ausser dass man 5 g eines anionischen oberflächenaktiven Mittels (des Natriumsalzes eines Sulphoäthoxy-Alkylphenols) zur Kupplungskomponente zugibt. Nach dem Aufarbeiten erhält man 101 g eines orange-roten Pigmentes mit leicht verbesserter Farbstärke.

Beispiel 5: Man geht gleich wie in Beispiel 1 vor, ausser dass man eine Staybelite®-Harz-Lösung, die aus 10 g in einer heissen Lösung von 2 g Natriumhydroxid in 50 ml Wasser gelöstem Harz besteht, nach der Kupplung zugibt. Nach der üblichen Wärmebehandlung bringt man den pH-Wert auf 5 und isoliert das Pigment durch Filtration. Man erhält 105 g eines mit Harz imprägnierten Pigmentes.

Beispiel 6: Man geht wie in Beispiel 1 vor, ausser dass man o-Nitroanilin durch 43 g 4-Methoxy-2-Nitroanilin ersetzt, und die Diazotierung 3 Stunden dauert. Nach dem üblichen Aufarbeiten erhält man 105 g eines roten Pigmentes der Formel

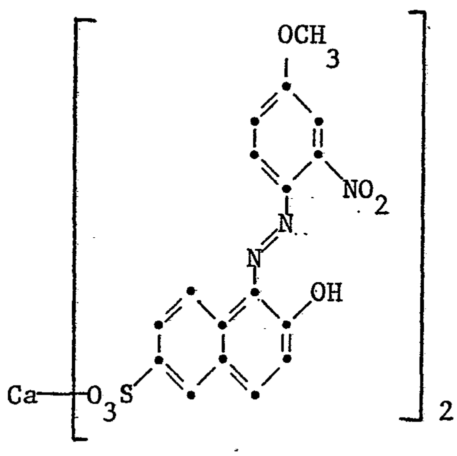

Beispiel 7: Man geht wie in Beispiel 1 vor, ausser, dass man o-Nitroanilin durch 46,6 g 4-Carboxy-2-nitroanilin ersetzt, die Diazotierung 5 Stunden dauert, und das feste Diazoniumchlorid nicht filtriert wird. Nach dem üblichen Aufarbeiten erhält man 106 g eines orangen Pigmentes der Formel

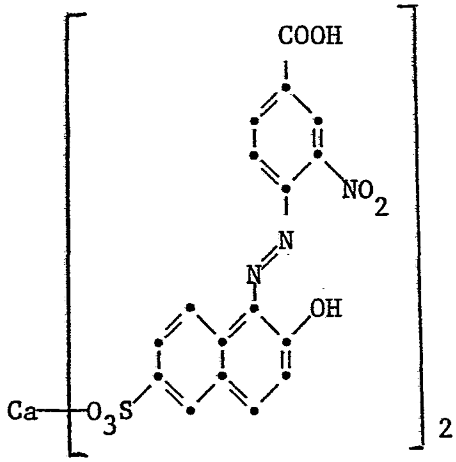

Beispiel 8: Man geht wie in Beispiel 1 vor, ausser dass man das Calciumchloriddihydrat durch 30,5 g Magnesiumchloridhexahydrat ersetzt. Nach der üblichen Aufarbeitung erhält man 100 g eines amorphen orangen Pulvers.

Beispiel 9: Man geht wie in Beispiel 1 vor, ausser dass man das Calciumchloriddihydrat durch 36,6 g Bariumchloriddihydrat ersetzt. Nach der üblichen Aufarbeitung erhält man 110 g eines orangeroten Pigmentes.

Beispiel 10: Man geht wie in Beispiel 1 vor, ausser dass man das Calciumchloriddihydrat durch 31,8 g Strontiumnitrat ersetzt. Nach dem üblichen Aufarbeiten erhält man 103 g eines orangen Pigmentes.

Beispiel 11: 0,1 Gew.-Teile des Pigmentes aus Beispiel 1 werden in 100 Gew.-Teile Weich.-PVC eingewalzt. Die Felle werden während 5 Minuten bei 170°C zu Formen gepresst. Das pigmentierte PVC zeigt eine ausgezeichnete Dispergierbarkeit, Hitzebeständigkeit und Migrationsechtheit.

Beispiel 12: 0,1 Gew.-Teile des Pigmentes aus Beispiel 1 werden in 100 Gew.-Teile HD-Polyäthylen eingewalzt. Die Felle werden zu Platten

gegossen. Die pigmentierten Platten sind ohne Farbveränderungen bei Temperaturen bis zu über 260°C hitzebeständig.

Patentansprüche

1. Pigmente der Formel I

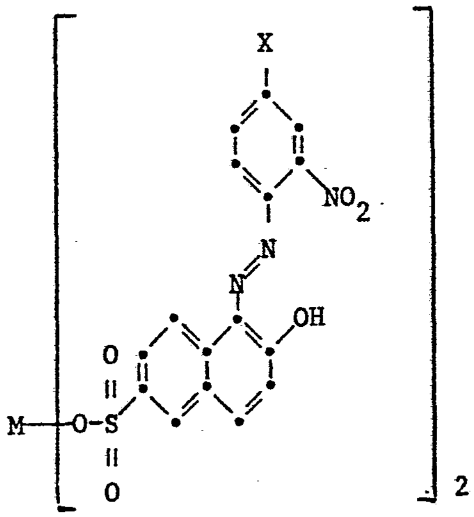

(I) ,

worin X Wasserstoff, Methoxy oder $-CO_2R$ bedeutet, wobei R Wasserstoff oder ein Alkali- oder Erdalkalimetall ist, und M Mg, Ca, Sr oder Ba oder eine Mischung dieser Metalle bedeutet.

2. Das Pigment gemäss Anspruch 1 der Formel I, worin X Wasserstoff und M Ca bedeutet.

3. Verfahren zur Herstellung der Pigmente der Formel I gemäss Anspruch 1, dadurch gekennzeichnet, dass man

a) das Diazoniumsalz eines Amins der Formel II

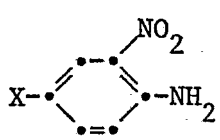

(II) ,

worin X die in Anspruch 1 angegebene Bedeutung hat, mit 2-Naphthol-6-sulphonsäure kuppelt, den entstandenen Azofarbstoff mit Mg-, Ca-, Sr- oder Ba-Salzen von organischen oder anorganischen Säuren oder mit Mischungen dieser Salze ausfällt und das entstandene Produkt einer Hitzebehandlung unterwirft, oder

b) 2-Naphthol-6-sulphonsäure zuerst mit einem Mg-, Ca-, Sr- oder Ba-Salz einer organischen oder anorganischen Säure oder mit Mischungen dieser Salze umsetzt und anschliessend mit dem Diazoniumsalz eines Amins der Formel II kuppelt, und das entstandene Produkt einer Hitzebehandlung unterwirft.

4. Hochmolekulares organisches Material enthaltend ein Pigment der Formel I gemäss Anspruch 1.

0052069

Nummer der Anmeldung

Europäisches Patentamt

# EUROPÄISCHER RECHERCHENBERICHT

EP 81 81 0415

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| X | FR - A - 375 828 (LUCIUS & BRUNING)<br>* Seite 1, Zeilen 1-50 *<br>-- | 1-4 | C 09 B 63/00<br>29/16//<br>C 08 K 5/23 |
| A | JP - A - 48 1697 (DAINICHISEIKA)<br>* Spalten 1-7 *<br>---- | 1,2,4 | |
| | | | RECHERCHIERTE SACHGEBIETE (Int. Cl.³) |
| | | | C 09 B 63/00<br>- 29/00 |
| | | | KATEGORIE DER GENANNTEN DOKUMENTE<br>X: von besonderer Bedeutung allein betrachtet<br>Y: von besonderer Bedeutung in Verbindung mit einer anderen Veröffentlichung derselben Kategorie<br>A: technologischer Hintergrund<br>O: nichtschriftliche Offenbarung<br>P: Zwischenliteratur<br>T: der Erfindung zugrunde liegende Theorien oder Grundsätze<br>E: älteres Patentdokument, das jedoch erst am oder nach dem Anmeldedatum veröffentlicht worden ist<br>D: in der Anmeldung angeführtes Dokument<br>L: aus andern Gründen angeführtes Dokument |
| X | Der vorliegende Recherchenbericht wurde für alle Patentansprüche erstellt. | | &: Mitglied der gleichen Patentfamilie, übereinstimmendes Dokument |

| Recherchenort | Abschlußdatum der Recherche | Prüfer |
|---|---|---|
| Den Haag | 03-03-1982 | GREEN |